# FASCICULE DE BREVET EUROPEEN

(11) **EP 3 642 054 B1**
(45) Date de publication et mention de la délivrance du brevet: **05.10.2022**
(21) Numéro de dépôt: 18732841.4
(22) Date de dépôt: 31.05.2018
(51) Int. Cl.: B60C 17/00, B60C 23/04

(54) **PNEUMATIQUE ADAPTE POUR ROULAGE A PLAT EQUIPE D'UN ORGANE ELECTRONIQUE**
MIT EINER ELEKTRONISCHEN VORRICHTUNG AUSGESTATTETER REIFEN MIT NOTLAUFEIGENSCHAFTEN
TIRE ADAPTED FOR RUNFLAT OPERATING AND EMBEDDING AN ELECTRONIC DEVICE

(30) Priorité: 22.06.2017 FR 1755690
(43) Date de publication de la demande: 29.04.2020
(73) Titulaire: Compagnie Générale des Etablissements Michelin, 63000 Clermont-Ferrand (FR)
(72) Inventeur: GRECO, Mathieu, 63040 Clermont-Ferrand Cedex 9 (FR); GLIBERT, Séverine, 63040 Clermont-Ferrand Cedex 9 (FR); MUHLHOFF, Olivier, 63040 Clermont-Ferrand Cedex 9 (FR)
(74) Mandataire: Roussy, Delphine
(86) Numéro de dépôt international: PCT/FR2018/051259
(87) Numéro de publication internationale: WO 2018/234649

(56) Documents cités:
- EP-A1- 2 186 658
- EP-A2- 1 550 568
- WO-A1-98/54014
- WO-A2-2007/127220
- DE-A1-102008 054 210
- DE-U1-202017 102 186
- FR-A1- 2 925 393
- FR-A1- 2 936 977
- US-A1- 2008 246 588

## Description

### Domaine de l'invention

La présente invention concerne un pneumatique adapté pour le roulage à plat et équipé d'un organe électronique.

### État de la technique

Depuis quelques années, les manufacturiers de pneumatiques cherchent à supprimer la nécessité de la présence d'une roue de secours à bord du véhicule tout en garantissant la possibilité au véhicule de poursuivre sa route malgré une perte importante ou totale de pression d'un ou plusieurs pneumatiques. Cela permet par exemple de se rendre à un point de dépannage sans devoir s'arrêter, dans des circonstances souvent hasardeuses, pour installer la roue de secours.

Une solution envisagée est l'utilisation de pneumatiques adaptés pour un roulage à plat et pourvus de flancs autoporteurs, (parfois désignés par les appellations commerciales en langue anglaise « ZP » pour « zéro pressure » ou « SST » pour « self supporting tire »).

On connaît de l'état de la technique un pneumatique adapté pour un roulage à plat comportant un sommet comprenant une armature de sommet, formée de deux nappes de sommet d'éléments de renfort et surmontée d'une bande de roulement. Deux flancs prolongent le sommet radialement vers l'intérieur. Ces flancs sont renforcés au moyen d'inserts en caoutchouc permettant de supporter une charge à pression réduite, voire sans pression.

Le pneumatique comporte en outre deux bourrelets comprenant chacun une tringle ainsi qu'une armature de carcasse s'étendant depuis les bourrelets à travers les flancs vers le sommet et comportant au moins une nappe de carcasse d'éléments de renfort. La nappe de carcasse est ancrée à chacun des bourrelets par un retournement autour de la tringle.

Lorsque la pression de gonflage est significativement abaissée par rapport à la pression de service, voire même nulle (on parle alors de mode « roulage à plat »), le pneumatique doit permettre de rouler une distance donnée à une vitesse donnée. Cette performance, dite performance « RME » (Roulage Mode Étendu), est requise par la législation ou par les constructeurs automobiles pour permettre au manufacturier de présenter le pneumatique comme adapté pour le roulage à plat.

Lorsque la pression de gonflage est proche de la pression de service (on parle alors de mode « roulage normal »), il est souhaitable que le pneumatique présente des performances, dites performances « RMG » (Roulage Mode Gonflé), aussi élevées que possible. Ces performances RMG comprennent, entre autres, la masse, la résistance au roulement ou encore le confort.

D'autre part, il est avantageux de munir les pneumatiques d'organes électroniques d'identification qui permettent leur identification et leur suivi pendant leur fabrication, leur stockage, l'ensemble de leur vie et aussi lors de leur rechapage.

Les pneumatiques concernés sont les pneumatiques de tous types pour véhicules poids lourds, de tourisme, génie civil, agricole, avion.

De tels organes électriques peuvent être des transpondeurs radiofréquence ou RFID (Radio Frequency IDentification).

La mise en place de ces organes électroniques doit être très précise pour garantir une bonne communication radiofréquence, une durée de vie acceptable des dispositifs ainsi que pour ne pas pénaliser le fonctionnement ou l'endurance des pneumatiques.

Les conditions particulières d'utilisation des pneumatiques aptes à rouler à plat lors d'un tel roulage à plat rendent particulièrement difficile l'introduction de tels organes électroniques dans ces types de pneumatiques.Il est connu de l'art antérieur le document FR2925393A1 décrivant une architecture de pneumatique apte à rouler à plat qui représente le domaine technique de l'invention. Il est aussi connu le documents DE102008054210A1 présentant des pneumatiques équipés d'organes électroniques destinées à mesurer des paramètres physiques du pneumatiques. Et le document WO2007127220A2 traite aussi des objets en mélange élastomère, de type pneumatique par exemple, comprenant des organes électroniques de type capteurs intégrés dans sa structure. Enfin, l'état de la technique mentionne aussi le document DE202017102186U1 qui s'interesse plutôt à des pneumatiques équipés d'organes électroniques de type RFID positionnée dans le flanc du pneumatique en zone basse qui est plus proche du domaine technique dela présente invention.

### Description brève de l'invention

L'invention a pour objet un pneumatique adapté pour un roulage à plat, le pneumatique comportant un sommet, deux flancs et deux bourrelets, une armature de carcasse ancrée dans chaque bourrelet et un insert de flanc disposé dans chacun des deux flancs axialement intérieurement relativement à l'armature de carcasse. Ce pneumatique est caractérisé en ce qu'il est équipé d'un organe électronique comprenant au moins un transpondeur radiofréquence et en ce que l'organe électronique est placé axialement intérieurement relativement à la couche de gomme extérieure du flanc et extérieurement relativement à l'armature de carcasse et radialement à plus de 55 % de la hauteur de section du pneumatique.

Préférentiellement, l'organe électronique est placé radialement à plus de 65 % de la hauteur de section dudit pneumatique.

L'organe électronique peut être placé à l'interface entre la couche de gomme extérieure du flanc et l'armature de carcasse.

Dans cette zone les sollicitations mécaniques sont faibles lors d'un roulage en mode gonflé en raison de la forte rigidité de la gomme caoutchouteuse qui constitue l'insert de flanc. Cela permet d'avoir une bonne tenue en fatigue de l'organe électronique.

Cette position permet de garantir une qualité optimale de la communication électromagnétique de l'organe électronique vers un récepteur externe au pneumatique. La roue sur laquelle le pneumatique est monté est en général métallique et une position trop proche de celle-ci peut perturber la communication.

Un autre avantage indéniable est que pendant la vie du pneumatique en mode normal, gonflé, celui-ci peut subir de nombreux râpages trottoirs. Dans les cas les plus sévères (taxis, ...), la couche de gomme extérieure du flanc peut même s'user sur 80% de son épaisseur à neuf. On constate que ces usures se produisent autour de la zone axialement la plus à l'extérieur du pneumatique, et décentrée vers le crochet de jante. Une telle position, à plus de 55 % et préférentiellement plus de 65 % de la hauteur de section du pneumatique est donc très intéressante, car peu usée par des râpages trottoirs.

Le placement à l'interface entre la gomme de flanc et l'armature de carcasse est avantageux car il est aisé de venir positionner l'organe électronique lors de la confection du pneumatique à cette interface.

Selon un autre mode de réalisation, la couche de gomme extérieure du flanc ayant une extrémité radialement extérieure P, l'organe électronique est placé radialement intérieurement à une distance D supérieure à 5 mm et préférentiellement supérieure à 10 mm de cette extrémité radialement extérieure de la couche de gomme du flanc.

Cela permet d'écarter l'organe électronique d'une zone mécaniquement plus sollicitée en service.

Selon une autre caractéristique du pneumatique objet de l'invention, l'insert de flanc a une épaisseur maximale comprise entre 6 et 16 mm.

L'organe électronique peut être constitué d'un transpondeur radiofréquence. Il peut aussi être constitué d'un transpondeur radiofréquence encapsulé dans une masse de gomme d'enrobage isolante électriquement.

Il est nécessaire pour un bon fonctionnement radiofréquence de l'antenne rayonnante de l'organe électronique, que cette antenne soit noyée dans une masse de gomme d'enrobage isolante électriquement. On peut ainsi utiliser un semi-fini constitué d'un transpondeur radiofréquence noyé dans une masse de gomme isolante électriquement pour le placer dans la structure du pneumatique lors de sa fabrication à la place choisie.

Mais il est aussi possible de placer directement le transpondeur radiofréquence entre deux mélanges du pneumatique lorsque ceux-ci, en raison de leur formulation, sont isolants électriquement.

De préférence, le module en extension de la masse de gomme d'enrobage est inférieur ou égal au module en extension des mélanges caoutchouteux adjacents.

Selon un autre aspect, la constante diélectrique relative de la masse de gomme d'enrobage est inférieure à la constante diélectrique relative des mélanges caoutchouteux adjacents.

Les transpondeurs radiofréquences comprennent usuellement une puce électronique et une antenne rayonnante apte à communiquer avec un lecteur radiofréquence externe.

Selon un premier mode de réalisation, l'antenne rayonnante comportant deux tronçons d'antennes hélicoïdales, la puce électronique est connectée galvaniquement aux deux tronçons d'antennes hélicoïdales.

Selon un autre mode de réalisation, le transpondeur radiofréquence comprend en plus une antenne primaire connectée électriquement à la puce électronique, dans lequel l'antenne primaire est couplée inductivement à l'antenne rayonnante, et dans lequel l'antenne rayonnante est une antenne dipôle constituée d'un ressort hélicoïdal monobrin.

Ce deuxième mode de réalisation a l'avantage de dissocier mécaniquement l'antenne rayonnante des composants électroniques du transpondeur et ainsi de supprimer le point faible des transpondeurs usuels à savoir la zone de fixation des tronçons d'antenne sur le support de la puce électronique. L'intégration d'un tel organe électronique dans un pneumatique permet de réduire les risques de détérioration de l'organe de par sa structure tout en améliorant la performance de radiocommunication et en minimisant les risques liés à l'intégrité physique du pneumatique.

En effet, la détérioration de l'organe électronique provient généralement de défaillances au niveau des connexions électriques existant entre l'antenne rayonnante de communication et la partie électronique de l'organe. Ici aucune connexion mécanique n'est réalisée puisque le transfert d'énergie entre l'antenne de communication et la puce électronique est fait par champ électromagnétique via une antenne primaire. Or, si la dimension de l'antenne rayonnante, liée à la bande de fréquence de communication et à son fonctionnement en champ lointain, est par nature de grande dimension, l'antenne primaire n'est pas soumise à cette contrainte. De ce fait, elle est de plus petite taille en général permettant de supporter aisément les déformations du pneumatique sans générer de trop fortes contraintes mécaniques au sein de sa jonction galvanique avec la puce électronique. Enfin la nature souple de l'antenne rayonnante limite les risques de détérioration de la zone du pneumatique proche du transpondeur.

En second lieu, l'introduction de l'antenne primaire permet de dissocier des fonctions antagonistes entre dimension de l'antenne rayonnante et impédance électrique de la partie électronique de l'organe. Ainsi, il est possible de dimensionner l'antenne primaire afin d'adapter son impédance électrique à la puce pour minimiser les pertes et améliorer de ce fait la performance énergétique de l'organe électronique. Le dimensionnement de l'antenne rayonnante suit alors le seul critère de la fréquence de communication de l'organe électronique. L'ensemble tend à améliorer la performance de radiocommunication de l'organe électronique.

Selon un mode de réalisation préférentiel, l'antenne rayonnante définissant un premier axe longitudinal, l'antenne primaire est une bobine ayant au moins une spire définissant un deuxième axe longitudinal qui est circonscrite dans un cylindre dont l'axe de révolution est parallèle au deuxième axe longitudinal et dont le diamètre est compris entre le tiers et trois fois, de préférence entre la moitié et deux fois, le diamètre moyen du ressort hélicoïdal de l'antenne rayonnante.

Ainsi, l'antenne primaire étant une antenne boucle, le transfert d'énergie entre l'antenne rayonnante et l'antenne primaire est principalement réalisé par couplage inductif. Cela impose alors une certaine proximité (pour limiter l'entrefer entre les deux antennes) entre les deux antennes nécessitant un dimensionnement de la bobine de l'antenne primaire par rapport à l'antenne rayonnante pour assurer une efficacité de transfert d'énergie suffisante pour avoir la qualité de radiocommunication souhaitée. Concrètement, l'antenne primaire peut avantageusement être de diamètre inférieur à celui de l'antenne rayonnante, dans ce cas l'ensemble de la partie électronique du transpondeur est insérée dans l'antenne rayonnante et l'ensemble est particulièrement robuste dans un environnement tel que celui d'un pneumatique.

L'antenne peut aussi être de diamètre supérieur à celui de l'antenne rayonnante, ce cas est particulièrement avantageux lorsque l'on souhaite ajouter au transpondeur radiofréquence d'autres composants électroniques, actifs ou passifs, pour réaliser des fonctions complémentaires, par exemple de surveillance de l'état du pneumatique.

Selon un mode de réalisation avantageux, l'antenne rayonnante ayant une zone centrale entre deux zones latérales et l'antenne primaire ayant un plan médian perpendiculaire au deuxième axe longitudinal, les premier et deuxième axes longitudinaux sont parallèles entre eux et le plan médian de l'antenne primaire est disposé dans la zone centrale de l'antenne rayonnante.

Ainsi on assure à la fois que la distance entre les antennes rayonnante et primaire est constante le long des axes longitudinaux de ces antennes optimisant ainsi au niveau de chaque élément de longueur de l'antenne primaire un transfert d'énergie équivalent. De plus, le champ magnétique créé par une bobine parcourue par un courant électrique étant maximal au centre de la longueur de la bobine (dans le cas d'une antenne λ/2), il est préférable de placer le plan médian de l'antenne primaire dans la zone centrale de l'antenne rayonnante et plus préférentiellement au centre de celle-ci pour maximiser le champ magnétique à l'origine du couplage inductif.

Préférentiellement, dans le cas de pneumatiques aptes au roulage à plat, l'antenne primaire est disposée à l'intérieur du ressort hélicoïdal monobrin de l'antenne rayonnante.

Il est avantageux, lorsque le pneumatique a un sens de roulage préférentiel de disposer un organe électronique dans chacun des deux flancs.

En revanche, lorsque le pneumatique a un côté extérieur et un côté intérieur de montage sur un véhicule, l'organe électronique est avantageusement disposé dans le flanc du côté extérieur du pneumatique.

Dans les deux cas de figure, après montage, un organe électronique est toujours placé dans le flanc placé vers l'extérieur du véhicule, cela permet de faciliter la communication entre cet organe électronique et son transpondeur radio fréquence et un récepteur extérieur.

### Description des Figures

Les différents objets de l'invention seront mieux compris au moyen de la description détaillée qui suit, conjointement avec les figures annexés sur lesquelles les mêmes numéros de référence désignent partout des parties identiques, et dans lesquelles :
- la figure 1 illustre en coupe axiale partielle un pneumatique apte à un roulage à plat et équipé d'un organe électronique ;
- la figure 2 présente un transpondeur radio fréquence usuel ;
- la figure 3 présente une vue éclatée schématique d'un organe électronique selon un deuxième mode de réalisation ;
- la figure 4 présente une vue en perspective d'un transpondeur radiofréquence selon un mode de réalisation de l'invention dans une configuration où la partie électronique est située à l'intérieur de l'antenne rayonnante ;
- la figure 5 présente une vue en perspective d'un transpondeur radiofréquence selon l'invention dans une configuration où la partie électronique est située à l'extérieur de l'antenne rayonnante ;
- la figure 6 présente une vue de détail d'une antenne rayonnante d'un transpondeur radiofréquence selon un mode de réalisation de l'invention ; et
- la figure 7 présente une vue en perspective de la partie électronique d'un transpondeur radiofréquence dans une configuration où la partie électronique est située à l'intérieur de l'antenne rayonnante.

### Description détaillée de l'invention

Dans ce qui suit, les termes « gomme caoutchouteuse », « mélange caoutchouteux », « gomme » et « mélange » sont utilisés de façon équivalente pour identifier des constituants caoutchouteux du pneumatique.

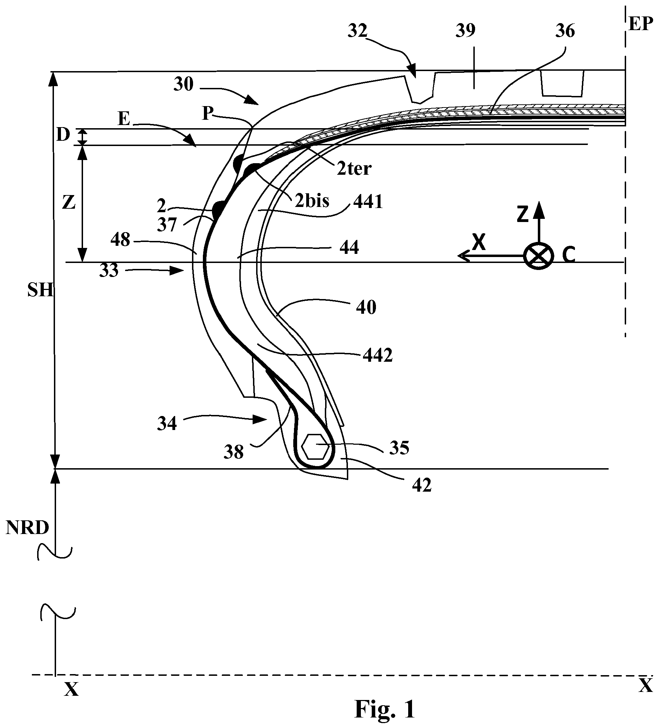

La figure 1 indique les directions axiale X, circonférentielle C et radiale Z ainsi que le plan médian EP (plan perpendiculaire à l'axe de rotation du pneumatique qui est situé à mi-distance des deux bourrelets du pneumatique et passe par le milieu de l'armature de sommet) et l'axe de rotation XX du pneumatique 30.

Cette figure indique aussi la hauteur de section SH du pneumatique, c'est-à-dire la distance radiale entre le diamètre nominal de la jante de montage du pneumatique NRD et la partie radialement la plus extérieure de la bande de roulement du pneumatique. Dans le cadre de cette invention, on prend comme diamètre nominal de la jante de montage du pneumatique, le diamètre du pneumatique tel qu'indiqué par sa dimension.

Dans toutes les figures, le pneumatique est représenté libre, non monté sur une jante et tel que la largeur entre les deux bourrelets est ramenée à la largeur de la jante nominale ETRTO.

En ce qui concerne la direction axiale, on entend par « axialement extérieur » une direction axiale dirigée vers l'extérieur du pneumatique et par « axialement intérieur » une direction axiale dirigée vers le plan médian EP du pneumatique.

Ce pneumatique 30 apte au roulage à plat comporte un sommet 32 renforcé par une armature de sommet ou ceinture 36, un flanc 33 et un bourrelet 34, le bourrelet 34 étant renforcé avec une tringle 35. L'armature de sommet 36 est surmontée radialement extérieurement d'une bande de roulement caoutchouteuse 39. Une armature de carcasse 37 est enroulée autour de la tringle 35 dans le bourrelet 34, le retournement 38 de cette armature 37 étant par exemple disposé vers l'extérieur du pneumatique 30. L'armature de carcasse 37 est de manière connue en soi constituée d'au moins une nappe renforcée par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian EP. Une couche de gomme intérieure étanche 40 (en anglais « inner liner ») s'étend d'un bourrelet à l'autre radialement intérieurement relativement à l'armature de carcasse 37. Le bourrelet 34 comporte une gomme protectrice (ou « protecteur ») 42 apte à être en contact avec la surface d'une jante. Il comporte aussi une première gomme de bourrage 46 s'étendant radialement extérieurement relativement à la tringle 35.

Le pneumatique 30 est apte à rouler à plat en raison de la présence d'un insert de flanc 44 disposé axialement intérieurement relativement à l'armature de carcasse 37. Cet insert comprend deux masses de gommes circonférentielles et adjacentes 441 et 442. Cet insert 44 permet à la structure du pneumatique de supporter la charge à pression nulle. L'ordre de grandeur du module d'extension d'une gomme caoutchouteuse d'un insert de flanc est de l'ordre de deux fois la valeur du module d'une gomme de flanc ou plus.

Le flanc 33 de la figure 1 comporte un organe électronique 2 disposé axialement à l'interface entre l'armature de carcasse 37 et la couche de gomme extérieure de flanc 48 et radialement dans une zone Z située à plus de 55 % de la hauteur de section du pneumatique.

Cette zone Z est préférentiellement limitée radialement à une distance D de 5 mm de l'extrémité radialement extérieure P de la couche de gomme extérieure de flanc 48. Cette distance radiale D est très préférentiellement supérieure à 10 mm pour ne pas pénaliser la durée de vie en service de l'organe électronique.

Compte tenu du module élevé de la gomme caoutchouteuse qui constitue l'insert de flanc, nécessaire pour assurer la portance structurelle du pneumatique et du véhicule en roulage à plat, l'organe électronique est, dans la zone Z, beaucoup moins sollicité mécaniquement en roulage mode gonflé que dans le cas d'un pneumatique usuel sans insert de flanc et ainsi a une durée de vie en service acceptable.

A la figure 1, l'organe électronique 2 est placé à environ 70 % de SH.

La figure 1 présente aussi un organe électronique 2bis placé axialement entre la couche de gomme de flanc 48 et l'armature de carcasse 37. Plus précisément, il est disposé à l'interface entre l'armature de carcasse 37 et une masse de gomme adjacente, comprise dans la bande de roulement 39, placée entre l'armature de carcasse 37 et la couche de gomme de flanc 48.

Une troisième position favorable pour un organe électronique est aussi présentée à la figure 1. L'organe électronique 2ter est placé à l'interface entre la couche de gomme de flanc 48 et les masses de gomme adjacentes comprises ici dans la bande de roulement 39. Cette troisième position est radialement en deçà du point P, extrémité radialement extérieure de la couche de gomme de flanc 48, d'une distance supérieure à 5 mm et de préférence supérieure à 10 mm.

Les trois positions illustrées se trouvent dans la zone Z, zone favorable dans le cas d'un pneumatique comportant des inserts de flancs.

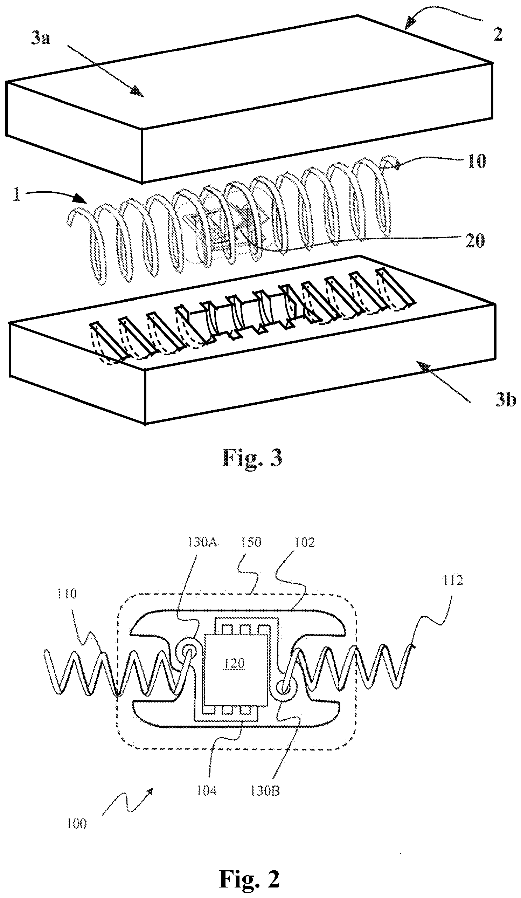

La figure 3 présente un éclaté d'un organe électronique 2. Cet organe 2 comprend un transpondeur radiofréquence 1 noyé entre deux couches 3a et 3b d'un mélange élastomère isolant électriquement non-vulcanisé. Un tel organe électronique est un produit semi-fini apte à être intégré dans la structure d'un pneumatique lors de la fabrication de celui-ci.

Le mélange élastomère d'enrobage contient 100 pce (parties pour 100 parties d'élastomère en masse) de polymère tel qu'EPDM (ethylene propylene diene monomer rubber), caoutchouc butyle, néoprène ou d'élastomère diénique tel que SBR (styrene-butadiene rubber), polybutadiène, caoutchouc naturel, ou polyisoprène.

Le mélange peut contenir des charges de type silice, noir de carbone, craie, kaolin :
- avec une charge de type silice à un taux maximum de 50 pce,
- avec une charge de type noir de carbone de grade ASTM supérieur à 700, à un taux inférieur à 50 pce ;
- avec une charge de type noir de carbone de grade inférieur ou égal à 500, a un taux maximum de 20 pce.
- il est possible d'ajouter ou de remplacer ces charges par de la craie ou du kaolin.

De tels taux et types de charges permettent de garantir une permittivité relative inférieure à 6.5, notamment à une fréquence de 915 MHz.

La rigidité à cuit du mélange d'enrobage est de préférence inférieure ou proche de celles des mélanges adjacents.

Dans un premier mode de réalisation illustré à la figure 2 le transpondeur radiofréquence de l'organe électronique 2 est un transpondeur radiofréquence usuel, tel que décrit dans le document WO2009134243A1. Ce transpondeur 100 comprend une puce électronique 120 fixée sur un support ou PCB (printed circuit board) 102 et galvaniquement connectée via des pistes conductrices 104, 130A et 130B à deux demi-antennes 110 et 112. Les antennes sont des ressorts hélicoïdaux à âme en fil d'acier. Le contour 150 fait référence à des couches de gomme caoutchouteuse non-conductrice qui recouvre le PCB, la puce électronique et au moins une partie des deux demi-antennes.

Le transpondeur radiofréquence 1 de l'organe électronique 2 tel que présenté à la figure 3 correspond à un deuxième mode de réalisation de l'organe électronique 2 qui va être décrit maintenant.

Le transpondeur radiofréquence 1 selon le deuxième mode de réalisation de l'organe électronique 2 comprend une puce électronique 22 et une antenne rayonnante 10 apte à communiquer avec un lecteur radiofréquence externe. Il comprend en plus une antenne primaire 24 connectée électriquement à la puce électronique 22 et couplée inductivement à l'antenne rayonnante 10. L'antenne rayonnante est une antenne dipôle constituée d'un ressort hélicoïdal monobrin définissant un premier axe longitudinal.

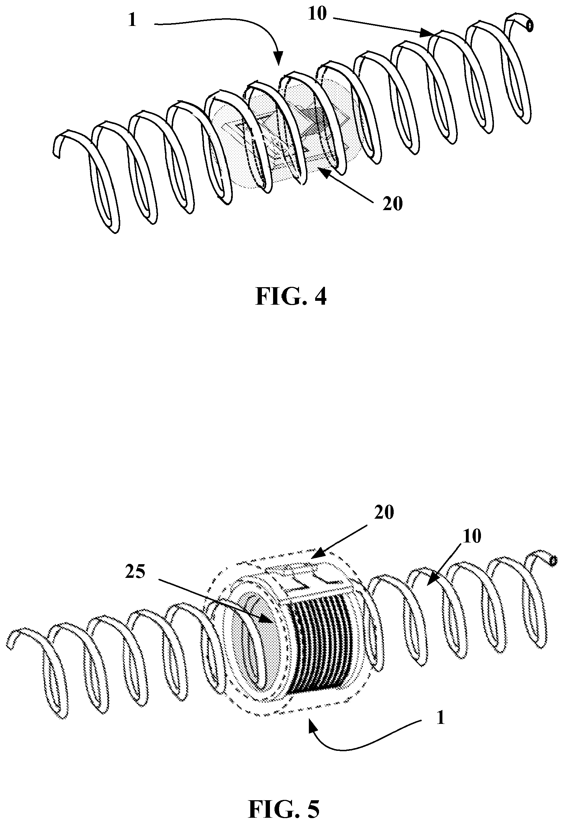

La figure 4 présente un transpondeur radiofréquence 1 dans une configuration où la partie électronique 20 est située à l'intérieur de l'antenne rayonnante 10. La forme géométrique de la partie électronique 20 est circonscrite dans un cylindre dont le diamètre est inférieur ou égal au diamètre intérieur 13 du ressort hélicoïdal 10. L'enfilement de la partie électronique 20 dans l'antenne rayonnante 10 s'en trouve facilité. Le plan médian 21 de l'antenne primaire se trouve dans la zone centrale de l'antenne rayonnante et sensiblement superposé au plan médian 19 de l'antenne rayonnante 10.

La figure 5 présente un transpondeur radiofréquence 1 dans une configuration où la partie électronique 20 se trouve à l'extérieur de l'antenne rayonnante 10. La forme géométrique de la partie électronique 20 présente une cavité cylindrique 25 dont le diamètre est supérieur ou égal au diamètre extérieur 15 de l'antenne rayonnante 10. L'enfilement de l'antenne rayonnante 10 dans la cavité cylindrique 25 de la partie électronique s'en trouve ainsi facilité. Le plan médian 21 de l'antenne primaire se trouve dans la zone centrale de l'antenne rayonnante et sensiblement dans le plan médian 19 de l'antenne rayonnante 10.

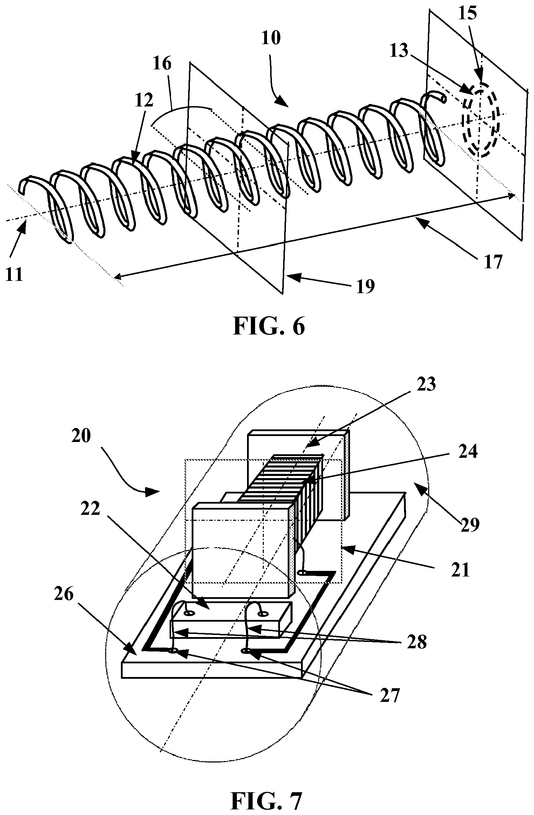

La figure 6 présente une antenne rayonnante 10 constituée d'un fil en acier 12 qui a été déformé plastiquement afin de former un ressort hélicoïdal présentant un axe de révolution 11. Ce fil d'acier est revêtu d'une couche de conduction en cuivre, aluminium, argent, zinc, or ou laiton recouverte si nécessaire d'une couche d'isolation chimique par exemple en laiton, zinc, nickel ou étain pour protéger le mélange caoutchouteux du matériau de la couche de conduction.

La conduction électromagnétique d'une telle antenne s'effectue principalement par un effet de peau, c'est-à-dire qu'elle est principalement assurée dans les couches extérieures de l'antenne. Cette épaisseur de peau est notamment fonction de la fréquence de rayonnement et du matériau constitutif de la couche de conduction. À titre d'exemple, pour une fréquence UHF (par exemple 915 MHz), l'épaisseur de peau est de l'ordre de 2,1 µm pour l'argent, 2,2 µm pour le cuivre, 4,4 µm pour le laiton.

Le fil d'acier peut être revêtu de ces couches puis mis en forme ; alternativement il peut aussi être mis en forme puis revêtu.

Le ressort hélicoïdal est défini tout d'abord par un diamètre d'enroulement du fil revêtu et un pas d'hélice. Ainsi, on détermine précisément des diamètres intérieur 13 et extérieur 15 du ressort hélicoïdal en prenant en compte le diamètre du fil. La longueur 17 du ressort 10 correspond ici à la demi-longueur d'onde du signal de transmission du transpondeur radiofréquence 1 dans une masse caoutchouteuse. Ainsi on peut définir un plan médian 19 au ressort hélicoïdal 10 perpendiculaire à l'axe de révolution 11 séparant l'antenne rayonnante en deux parties égales. Ce plan est au milieu de la zone centrale 16 de l'antenne rayonnante, cette zone centrale 16 correspond environ à 25 % de la longueur totale de l'antenne et de préférence 15 %.

La figure 7 présente la partie électronique 20 d'un transpondeur radiofréquence 1 destiné à une configuration où la partie électronique 20 est située à l'intérieur de l'antenne rayonnante 10. La partie électronique 20 comprend une puce électronique 22 et une antenne primaire 24 connectée électriquement à la puce électronique 22 par l'intermédiaire d'un circuit imprimé 26. L'antenne primaire est ici constituée par une micro bobine CMS (acronyme de Composant Monté en Surface) présentant un axe de symétrie 23. On détermine le plan médian 21 de l'antenne primaire défini par une normale parallèle à l'axe de symétrie 23 de la bobine CMS et séparant la bobine en deux parties égales. La connexion électrique entre les composants sur le circuit imprimé est réalisée à l'aide de pistes en cuivre terminé par des pastilles 27 en cuivre. La connexion électrique des composants sur le circuit imprimé est réalisée à l'aide de la technique dite du « wire bonding » par des fils 28 en or entre le composant et les pastilles 27. L'ensemble constitué du circuit imprimé 26, de la puce électronique 22 de l'antenne primaire 24 est noyé dans une masse rigide 29 en résine époxy haute température isolante électriquement constituant la partie électronique 20 du transpondeur radiofréquence 1.

Ce transpondeur radiofréquence 1 a l'avantage d'être beaucoup plus résistant mécaniquement que les transpondeurs usuels et ainsi est particulièrement adapté à un usage sévère tel que rencontré avec des pneumatiques aptes à rouler à plat.

## Revendications

1. Pneumatique (30) adapté pour un roulage à plat, ledit pneumatique (30) comportant un sommet (32), deux flancs (33) et deux bourrelets (34), une armature de carcasse (37) ancrée dans chaque bourrelet (34) et un insert de flanc (44) disposé dans chacun des deux flancs (33) axialement intérieurement relativement à ladite armature de carcasse (37), **caractérisé en ce que** ledit pneumatique (30) est équipé d'un organe électronique (2) comprenant au moins un transpondeur radiofréquence (1, 100) et **en ce que** ledit organe électronique (2) est placé axialement intérieurement relativement à la couche de gomme extérieure (48) dudit flanc (33) et extérieurement relativement à l'armature de carcasse (37) et radialement à plus de 55 % de la hauteur de section (SH) dudit pneumatique (30).

2. Pneumatique (30) selon la revendication 1, dans lequel ledit organe électronique (2) est placé radialement dans une zone représentant plus de 65 % de la hauteur de section (SH) dudit pneumatique (30).

3. Pneumatique (30) selon l'une des revendications 1 et 2, dans lequel, ledit organe électronique (2) est placé à l'interface entre la couche de gomme extérieure (48) dudit flanc (33) et ladite armature de carcasse (37).

4. Pneumatique (30) selon l'une des revendications 1 et 2, dans lequel, la couche de gomme extérieure (48) du flanc (33) ayant une extrémité radialement extérieure (P), l'organe électronique (2) est placé radialement intérieurement à une distance supérieure à 5 mm de ladite extrémité radialement extérieure (P) de la couche de gomme (48) dudit flanc (33).

5. Pneumatique (30) selon la revendication 4, dans lequel l'organe électronique (2) est placé radialement intérieurement à une distance supérieure à 10 mm de ladite extrémité radialement extérieure (P) de la couche de gomme (48) dudit flanc (33).

6. Pneumatique (30) selon l'une quelconque des revendications précédentes, dans lequel l'insert de flanc (44) a une épaisseur maximale comprise entre 6 et 16 mm.

7. Pneumatique (30) selon l'une quelconque des revendications précédentes, dans lequel l'organe électronique (2) est constitué du transpondeur radiofréquence (1, 100).

8. Pneumatique selon l'une quelconque des revendications 1 à 6, dans lequel l'organe électronique (2) est constitué du transpondeur radiofréquence (1, 100) encapsulé dans au moins une masse de gomme d'enrobage (3a, 3b, 150) isolante électriquement.

9. Pneumatique (30) selon la revendication 8, dans lequel le module en extension de la masse de gomme d'enrobage (3a, 3b, 150) est inférieur ou égal au module en extension des mélanges caoutchouteux adjacents.

10. Pneumatique (30) selon l'une quelconque des revendications précédentes, dans lequel le transpondeur radiofréquence (1, 100) de l'organe électronique (2) comprend une puce électronique (120,22) et une antenne rayonnante (10) apte à communiquer avec un lecteur radiofréquence externe.

11. Pneumatique (30) selon la revendication 10, dans lequel, ladite antenne rayonnante (10) comportant deux tronçons d'antennes hélicoïdales (110, 112), ladite puce électronique (120) est connectée galvaniquement audits deux tronçons d'antennes hélicoïdales (110, 112).

12. Pneumatique (30) selon la revendication 10, dans lequel le transpondeur radiofréquence (1, 100) de l'organe électronique (2) comprend en plus une antenne primaire (24) connectée électriquement à la puce électronique (22), dans lequel l'antenne primaire (24) est couplée inductivement à l'antenne rayonnante (10), et dans lequel l'antenne rayonnante (10) est une antenne dipôle constituée d'un ressort hélicoïdal monobrin définissant un premier axe longitudinal (11).

13. Pneumatique (30) selon la revendication 12, dans lequel l'antenne primaire (24) est disposée à l'intérieur du ressort hélicoïdal monobrin de l'antenne rayonnante (10).

14. Pneumatique (30) selon l'une quelconque des revendications précédentes, dans lequel, le pneumatique (30) ayant un sens de roulage préférentiel, on dispose un organe électronique (2) dans chacun des deux flancs (33).

15. Pneumatique (30) selon l'une quelconque des revendications 1 à 13, dans lequel, le pneumatique (30) ayant un côté extérieur et un côté intérieur de montage sur un véhicule, ledit organe électronique (2) est disposé dans le flanc (33) du côté extérieur du pneumatique (30).

## Patentansprüche

1. Reifen (30) mit Notlaufeigenschaften, wobei der Reifen (30) einen Scheitel (32), zwei Flanken (33) und zwei Wülste (34), eine Karkassenbewehrung (37), die in jedem Wulst (34) verankert ist, und einen Flankeneinsatz (44), der in jeder der zwei Flanken (33) axial innen bezogen auf die Karkassenbewehrung (37) angeordnet ist, aufweist, **dadurch gekennzeichnet, dass** der Reifen (30) mit einer elektronischen Vorrichtung (2) ausgerüstet ist, die wenigstens einen Radiofrequenz-Transponder (1, 100) umfasst, und dadurch, dass die elektronische Vorrichtung (2) axial innen bezogen auf die äußere Gummischicht (48) der Flanke (33) und außen bezogen auf die Karkassenbewehrung (37) und radial auf mehr als 55 % der Querschnitthöhe (SH) des Reifens (30) platziert ist.

2. Reifen (30) nach Anspruch 1, wobei die elektronische Vorrichtung (2) radial in einem Bereich platziert ist, der mehr als 65 % der Querschnitthöhe (SH) des Reifens (30) darstellt.

3. Reifen (30) nach einem der Ansprüche 1 und 2, wobei die elektronische Vorrichtung (2) an der Grenzfläche zwischen der äußeren Gummischicht (48) der Flanke (33) und der Karkassenbewehrung (37) platziert ist.

4. Reifen (30) nach einem der Ansprüche 1 und 2, wobei, die äußere Gummischicht (48) der Flanke (33) aufweisend ein radial äußeres Ende (P), die elektronische Vorrichtung (2) radial innen in einem Abstand größer als 5 mm vom radial äußeren Ende (P) der Gummischicht (48) der Flanke (33) platziert ist.

5. Reifen (30) nach Anspruch 4, wobei die elektronische Vorrichtung (2) radial innen in einem Abstand größer als 10 mm vom radial äußeren Ende (P) der Gummischicht (48) der Flanke (33) platziert ist.

6. Reifen (30) nach einem der vorhergehenden Ansprüche, wobei der Flankeneinsatz (44) eine maximale Dicke zwischen 6 und 16 mm aufweist.

7. Reifen (30) nach einem der vorhergehenden Ansprüche, wobei die elektronische Vorrichtung (2) aus dem Radiofrequenz-Transponder (1, 100) besteht.

8. Reifen nach einem der Ansprüche 1 bis 6, wobei die elektronische Vorrichtung (2) aus dem Radiofrequenz-Transponder (1, 100) besteht, der in wenigstens einer elektrisch isolierenden Einbettungs-Gummimasse (3a, 3b, 150) gekapselt ist.

9. Reifen (30) nach Anspruch 8, wobei der Dehnungsmodul der Einbettungs-Gummimasse (3a, 3b, 150) kleiner als oder gleich dem Dehnungsmodul der angrenzenden Gummimischungen ist.

10. Reifen (30) nach einem der vorhergehenden Ansprüche, wobei der Radiofrequenz-Transponder (1, 100) der elektronischen Vorrichtung (2) einen Elektronikchip (120, 22) und eine Strahlungsantenne (10) umfasst, die geeignet ist, mit einem externen Radiofrequenzleser zu kommunizieren.

11. Reifen (30) nach Anspruch 10, wobei, die Strahlungsantenne (10) aufweisend zwei schraubenförmige Antennenteilstücke (110, 112), der Elektronikchip (120) galvanisch mit den zwei schraubenförmigen Antennenteilstücken (110, 112) verbunden ist.

12. Reifen (30) nach Anspruch 10, wobei der Radiofrequenz-Transponder (1, 100) der elektronischen Vorrichtung (2) außerdem eine Primärantenne (24) umfasst, die mit dem Elektronikchip (22) elektrisch verbunden ist, wobei die Primärantenne (24) mit der Strahlungsantenne (10) induktiv gekoppelt ist, und wobei die Strahlungsantenne (10) eine Dipolantenne ist, die aus einer Massivdraht-Spiralfeder besteht, die eine erste Längsachse (11) definiert.

13. Reifen (30) nach Anspruch 12, wobei die Primärantenne (24) im Inneren der Massivdraht-Spiralfeder der Strahlungsantenne (10) angeordnet ist.

14. Reifen (30) nach einem der vorhergehenden Ansprüche, wobei, der Reifen (30) aufweisend eine bevorzugte Laufrichtung, eine elektronische Vorrichtung (2) in jeder der zwei Flanken (33) angeordnet wird.

15. Reifen (30) nach einem der Ansprüche 1 bis 13, wobei, der Reifen (30) aufweisend eine Außenseite und eine Innenseite zur Montage an einem Fahrzeug, die elektronische Vorrichtung (2) in der Flanke (33) der Außenseite des Reifens (30) angeordnet ist.

## Claims

1. Tyre (30) suitable for running flat, said tyre (30) comprising a crown (32), two sidewalls (33) and two beads (34), a carcass reinforcement (37) anchored in each bead (34) and a sidewall insert (44) placed in each of the two sidewalls (33) axially internally relative to said carcass reinforcement (37), **characterized in that** said tyre (30) is equipped with an electronic device (2) comprising at least one radiofrequency transponder (1, 100) and **in that** said electronic device (2) is placed axially internally relative to the outer rubber layer (48) of said sidewall (33) and externally relative to the carcass reinforcement (37) and radially at above 55% of the section height (SH) of said tyre (30).

2. Tyre (30) according to Claim 1, wherein said electronic device (2) is placed radially in a zone representing over 65% of the section height (SH) of said tyre (30).

3. Tyre (30) according to one of Claims 1 and 2, wherein, said electronic device (2) is placed at the interface between the outer rubber layer (48) of said sidewall (33) and said carcass reinforcement (37).

4. Tyre (30) according to one of Claims 1 and 2, wherein, the outer rubber layer (48) of the sidewall (33) having a radially outer end (P), the electronic device (2) is placed radially internally at a distance larger than 5 mm from said radially outer end (P) of the rubber layer (48) of said sidewall (33).

5. Tyre (30) according to Claim 4, wherein the electronic device (2) is placed radially internally at a distance larger than 10 mm from said radially outer end (P) of the rubber layer (48) of said sidewall (33).

6. Tyre (30) according to any one of the preceding claims, wherein the sidewall insert (44) has a maximum thickness comprised between 6 and 16 mm.

7. Tyre (30) according to either one of the preceding claims, wherein the electronic device (2) consists of the radiofrequency transponder (1, 100).

8. Tyre according to any one of Claims 1 to 6, wherein the electronic device (2) consists of the radiofrequency transponder (1, 100) encapsulated in at least one electrically insulating encapsulating rubber mass (3a, 3b, 150).

9. Tyre (30) according to Claim 8, wherein the elastic modulus of the encapsulating rubber mass (3a, 3b, 150) is lower than or equal to the elastic modulus of the adjacent rubber blends.

10. Tyre (30) according to any one of the preceding claims, wherein the radiofrequency transponder (1, 100) of the electronic device (2) comprises an electronic chip (120, 22) and a radiating antenna (10) able to communicate with an external radiofrequency reader.

11. Tyre (30) according to Claim 10, wherein, said radiating antenna (10) comprising two helical antenna segments (110, 112), said electronic chip (120) is galvanically connected to said two helical antenna segments (110, 112).

12. Tyre (30) according to Claim 10, wherein the radiofrequency transponder (1, 100) of the electronic device (2) in addition comprises a primary antenna (24) electrically connected to the electronic chip (22), wherein the primary antenna (24) is inductively coupled to the radiating antenna (10), and wherein the radiating antenna (10) is a dipole antenna consisting of a single-strand helical spring defining a first longitudinal axis (11).

13. Tyre (30) according to Claim 12, wherein the primary antenna (24) is placed in the interior of the single-strand helical spring of the radiating antenna (10).

14. Tyre (30) according to any of the preceding claims, wherein, the tyre (30) having a preferential running direction, an electronic device (2) is placed in each of the two sidewalls (33).

15. Tyre (30) according to any one of Claims 1 to 13, wherein, the tyre (30) having an outer side and an inner side for mounting on a vehicle, said electronic device (2) is placed in the sidewall (33) on the outer side of the tyre (30).
